# EUROPÄISCHE PATENTANMELDUNG

(11) **EP 3 666 058 A1**
(43) Veröffentlichungstag der Anmeldung: **17.06.2020**
(21) Anmeldenummer: 19205185.2
(22) Anmeldetag: 24.10.2019
(51) Int. Cl.: A01D 57/20, A01D 43/00, A01D 76/00

(54) **ERNTEMASCHINE**

(30) Priorität: 11.12.2018 DE 102018131772
(71) Anmelder: PÖTTINGER Landtechnik GmbH, 4710 Grieskirchen (AT)
(72) Erfinder: Wilflingseder, Florian, 4710 Grieskirchen (AT); Jungreithmayer, Martin, 4710 Grieskirchen (AT); Mair, Andreas, 4710 Grieskirchen (AT); Zauner, Günter, 4710 Grieskirchen (AT)
(74) Vertreter: Thoma, Michael

(57) **Zusammenfassung**

Die vorliegende Erfindung betrifft eine Erntemaschine mit einer Schwadvorrichtung, die eine Querförderstrecke umfassend mehrere, aneinander anschließende Querförderer aufweist, wobei zwischen zwei benachbarten Querförderern ein Übergabehilfsförderer zum Unterstützen der Erntegutübergabe von einem der Querförderer an den benachbarten Querförderer vorgesehen ist. Erfindungsgemäß umfasst der eingangs genannte Übergabehilfsförderer zumindest eine Übergabewalze, die um eine liegende, zumindest näherungsweise fahrtrichtungsparallele Walzendrehachse drehbar gelagert und zwischen benachbarten Endabschnitten zweier benachbarter Querförderer angeordnet ist.

## Beschreibung

Die vorliegende Erfindung betrifft eine Erntemaschine mit einer Schwadvorrichtung, die eine Querförderstrecke umfassend mehrere, aneinander anschließende Querförderer aufweist, wobei zwischen zwei benachbarten Querförderern ein Übergabehilfsförderer zum Unterstützen der Erntegutübergabe von einem der Querförderer an den benachbarten Querförderer vorgesehen ist.

Solche Erntemaschinen werden bisweilen als Bandschwader oder Merger bezeichnet und zeichnen sich dadurch aus, dass sie das Erntegut beim Schwaden sehr schonend behandeln, präzise ablegen und trotzdem einen recht hohen Durchsatz erreichen. Dabei wird das zu schwadende Erntegut von einer vorgeschalteten Funktionseinheit üblicherweise über die Breitseite auf den Querförderer aufgegeben und von diesem dann quer abgefördert und in einem Schwad abgelegt. Die vorgeschaltete Funktionseinheit kann dabei ein Mähwerk und gegebenenfalls eine zwischengeschaltete Konditioniereinheit sein, wie dies beispielsweise die Schrift DE 10 2007 003 195 A1 zeigt. Das von den Mähwerkzeugen geschnittene Erntegut wird direkt oder über einen zwischengeschalteten Förder- und/oder Konditionierrotor auf das Querförderband aufgegeben, um seitlich versetzt in einem Schwad abgelegt zu werden.

Alternativ kann anstelle eines Mähwerks die genannte Funktionseinheit auch ein Aufsammelförderer mit einer rotierenden Stachelwalze sein, die bisweilen als Pickup bezeichnet wird. Förderzinken können ungesteuert um eine feste Stachelrotordrehachse umlaufen oder auch gesteuert entlang einer kreis- oder auch nicht kreisförmigen Umlaufbahn um eine Umlaufachse umlaufen, um das am Boden liegende Erntegut aufzusammeln und auf dem Querförderer abzulegen, um von diesem dann quer zur Fahrtrichtung abgefördert und in einem Schwad abgelegt zu werden.

Bei größeren Arbeitsbreiten ist es sinnvoll, die vorgeschalteten Arbeitsaggregate und auch die Querförderstrecke in mehrere Segmente zu unterteilen, um eine bessere Bodenanpassung sicherstellen zu können. Beispielsweise zeigt die Schrift DE 20 2010 010 038 U1 einen Bandschwader, bei dem die dem Querförderband vorgeschaltete Pickup in mehrere Rotorsegmente unterteilt ist, die zueinander knickbar und jeweils pendelnd aufgehängt sind, sodass sich verschiedene Rotorsegmente in verschiedenen Winkelstellungen der jeweiligen Bodenneigung anpassen können, was insbesondere hilfreich ist, wenn Erntegut aus einer Längsrinne oder von einem leichten Längshügel aufzunehmen ist.

Da das Zusammenspiel zwischen vorgeschalteter Funktionseinheit und nachgeschaltetem Querförderer empfindlich auf einen zu großen Höhenversatz zwischen der vorgeschalteten Funktionseinheit und der nachgeschalteten Förderfläche des Querförderers reagiert, ist es sinnvoll, auch die nachgeschaltete Querförderstrecke in mehrere Segmente bzw. mehrere separate Querförderer zu unterteilen, um segmentweise auch den Querförderer an Bodenunebenheiten, insbesondere Längsrillen oder -wölbungen anpassen zu können. Bei einer solchen Unterteilung der Querförderstrecke in mehrere separate Querförderer, die aneinander anschließen, ergibt sich jedoch das Problem, dass im Übergabebereich von zwei benachbarten, aneinander anschließenden Querförderern das Erntegut nicht sauber von dem Auslaufbereich des einen Querförderers auf den Einlaufbereich des anderen Querförderers übergeben wird. Insbesondere kurzgeschnittenes Erntegut droht durch den Spalt zwischen zwei benachbarten Querförderern hindurchzufallen. Diese Problematik verschärft sich nochmals, wenn die beiden benachbarten Querförderer jeweils umliegende, näherungsweise fahrtrichtungsparallele Kippachsen zum Zwecke der Bodenanpassung verkippen können, sodass die Auslauf- und Einlaufbereiche zweier benachbarter Querförderer nicht mehr exakt auf demselben Höhenniveau liegen.

Hiervon ausgehend liegt der vorliegenden Erfindung die Aufgabe zugrunde, eine verbesserte Erntemaschine der genannten Art zu schaffen, die Nachteile des Standes der Technik vermeidet und letzteren in vorteilhafter Weise weiterbildet. Insbesondere soll auch bei Bodenanpassbewegungen der Erntemaschine eine verlässliche, saubere Übergabe des Ernteguts vom Auslaufbereich eines ersten Querförderers zum Einlaufbereich des benachbarten zweiten Querförderers erreicht werden.

Erfindungsgemäß wird die genannte Aufgabe durch eine Erntemaschine gemäß Anspruch 1 gelöst. Bevorzugte Ausgestaltungen der Erfindung sind Gegenstand der abhängigen Ansprüche.

Es wird also vorgeschlagen, zwischen zwei benachbarten Querförderern zumindest eine Übergabewalze vorzusehen, die dem quergeförderten Erntegut vom Auslaufbereich des einen Querförderers auf den Einlaufbereich des benachbarten Querförderers hilft und den Spalt zwischen zwei benachbarten Querförderern sozusagen überbrückt. Erfindungsgemäß umfasst der eingangs genannte Übergabehilfsförderer zumindest eine Übergabewalze, die um eine liegende, zumindest näherungsweise fahrtrichtungsparallele Walzendrehachse drehbar gelagert und zwischen benachbarten Endabschnitten zweier benachbarter Querförderer angeordnet ist. Durch eine solche Übergabewalze schafft es das querzufördernde Erntegut müheloser von dem einen Querförderer auf den anderen Querförderer, auch wenn zwischen den beiden Querförderern ein gewisser Spalt bzw. eine gewisse Beabstandung gegeben ist oder die beiden Querförderer mit ihrer Förderoberfläche nicht exakt auf demselben Höhenniveau liegen.

Die genannte, zumindest eine Übergabewalze kann in einfacher Ausgestaltung antriebslos frei drehbar umlaufen, sodass sie im Wesentlichen vom Erntegutstrom selbst angetrieben bzw. gedreht wird. Der vom Auslaufbereich des benachbarten Querförderers kommende Erntegutstrom trifft in diesem Fall auf die Übergabewalze und versetzt diese in Drehung, sodass das Erntegut unter Drehung der Übergabewalze auf den Einlaufbereich des benachbarten Querförderers übergeben werden kann.

Alternativ oder zusätzlich zu einer solchen antriebslosen Übergabewalze kann jedoch auch eine angetriebene Übergabewalze zwischen zwei benachbarten Querförderern vorgesehen sein, die von einem Drehantrieb beispielsweise in Form eines Elektromotors oder eines Hydromotors oder einer mechanischen Antriebskopplung, die von der Antriebsbewegung des Querförderers abgeleitet ist, rotiert wird. Eine solche angetriebene Übergabewalze kann das Erntegut im Bereich zwischen zwei benachbarten Querförderern aktiv weiterfördern und auf den Einlaufbereich des nächsten Querförderers übergeben, wodurch auch ein größerer Spalt oder ein gegebenenfalls größerer Höhenversatz zwischen den Querförderern noch besser überbrückt werden kann.

Insbesondere kann die Antriebsvorrichtung der Übergabewalze dazu ausgebildet sein, die Übergabewalze schneller anzutreiben als die benachbarten Querförderer, das heißt die Umfangsgeschwindigkeit der zumindest einen Übergabewalze kann größer sein als die Querfördergeschwindigkeit der benachbarten Querförderer oder zumindest größer als die Fördergeschwindigkeit eines der benachbarten Querförderer. Durch eine solche erhöhte Fördergeschwindigkeit der Übergabewalze kann das Erntegut bei der Übergabe beschleunigt und noch sicherer auf das nächstliegende Querförderaggregat befördert werden. Hierdurch wird der Verlust von Erntegut im Spalt zwischen den benachbarten Querförderern nochmals weiter vermieden.

Vorteilhafterweise kann die zumindest eine Übergabewalze etwas höher angeordnet sein als die benachbarten Förderflächen der benachbarten Querförderer, zumindest wenn diese in einer unausgelenkten Neutralstellung sind, in denen die beiden Querförderer zumindest näherungsweise auf demselben Niveau angeordnet sind. Je nach Aufhängung bzw. Montage der Übergabewalze kann die genannte, zumindest eine Übergabewalze mit ihrer Oberseite über die Förderfläche zumindest eines der benachbarten Querförderer in Betrieb dauerhaft nach oben vorspringen, sodass die genannte Übergabewalze mit ihrer Oberseite auch bei Bodenanpassbewegungen der Querförderer höher liegt als die Förderfläche zumindest eines der Querförderer. Insbesondere kann die zumindest eine Übergabewalze derart angeordnet sein, dass der Auslaufbereich des an die Übergabewalze übergebenden Querförderers tieferliegend angeordnet ist als die Oberseite der Übergabewalze. Hierdurch läuft das Erntegut von dem stromauf angeordneten Querförderer auf die genannte Übergabewalze auf und wird von dieser leicht angehoben, sodass das Erntegut nochmals leichter auf den stromab angeordneten Querförderer übergeben werden kann.

Die Aufhängung der Übergabewalze kann hierbei grundsätzlich in verschiedener Art und Weise bewerkstelligt werden. Beispielsweise kann die Übergabewalze an einem der Querförderer angebracht sein bzw. zusammen mit einem Querförderer aufgehängt sein, sodass die Übergabewalze relativ zu diesem Querförderer, mit dem sie verbunden ist, ortsfest positioniert ist und Bodenanpassbewegungen des Querförderers mitmacht.

Ortsfest meint aber nicht zwangsweise, dass die Übergabewalze permanent in einer fixen Position relativ zu dem Querförderer bleibt. Beispielsweise kann eine Einstellvorrichtung vorgesehen sein, mittels derer verschiedene Höhenstellungen der Übergabewalze relativ zu dem Querförderer, mit dem die Übergabewalze verbunden ist, eingestellt werden können. Im Betrieb kann die einmal eingestellte Position dann aber gehalten werden, sodass die Übergabewalze - von ihrer Drehbewegung abgesehen - bis zum nächsten Einstellvorgang ortsfest relativ zu dem Querförderer, dem sie zugeordnet ist, bleibt.

Alternativ kann die zumindest eine Übergabewalze aber auch lageverstellbar relativ zu beiden benachbarten Querförderern gelagert sein bzw. können umgekehrt die beiden Querförderer relativ zu der dazwischenliegenden Übergabewalze beweglich gelagert sein. Beispielsweise kann die genannte Übergabewalze ortsfest an einem Maschinenrahmen gelagert sein, sodass sich die beiden beweglich aufgehängten Querförderer relativ zu der Übergabewalze bewegen können, insbesondere auf- und niederwippen können. Insbesondere kann die genannte Übergabewalze dabei in einer Mittelstellung angeordnet sein, in der die Übergabewalze zu den beiden benachbarten Querförderern, wenn sich diese in ihrer Neutralstellung befinden, keinen oder den gleichen Höhenversatz besitzt.

Um das Erntegut sanft zu übergeben und gleichzeitig eine hohe Förderwirkung zu erzielen, kann die zumindest eine Übergabewalze einen vergrößerten Durchmesser besitzen, der größer ist als die Umlenkrollen bzw. Umlenkwalzen an den benachbarten Endabschnitten der Querförderer. Die genannten Querförderer können in Weiterbildung der Erfindung als Endlos-Umlaufförderer ausgebildet sein, bei denen ein endloses Umlaufmittel beispielsweise in Form mehrerer Riemen, mehrerer Ketten oder eines Förderbands um Umlenkrollen bzw. Umlenkwalzen, die an gegenüberliegenden Enden des Querförderers angeordnet sind, umlaufen. In an sich bekannter Weise können die genannten Umlenkmittel zwischen den Endabschnitten des Querförderers auch noch durch weitere Umlenkrollen bzw. Stützrollen oder auch Gleitschuhen abgestützt sein, um bei einer Beladung beispielsweise mit nassem Erntegut ein Durchdrücken bzw. -hängen des Obertrum des Umlaufmittels zu vermeiden.

Im Vergleich zu den endseitigen Umlenkrollen der benachbarten Endlos-Umlaufförderer, insbesondere Förderbänder, kann die im Spalt zwischen den Querförderern angeordnete, zumindest eine Umlenkwalze einen Durchmesser besitzen, der im Bereich von 125% bis 400% oder 150% bis 300% oder 175% bis 250% des Durchmessers der Umlenkrolle eines benachbarten Querförderer-Endabschnitts betragen kann.

In vorteilhafter Weiterbildung der Erfindung können zwischen den zwei benachbarten Querförderern auch zwei, drei oder mehrere Übergabewalzen angeordnet sein, so dass das Erntegut von dem Auslaufbereich des ersten Querförderers zunächst auf eine erste Übergabewalze und sodann auf eine zweite Übergabewalze und ggf. auf eine weitere, dritte Übergabewalze gelangt, um von der letzten Übergabewalze dann auf den Einlaufbereich des zweiten, nachgeschalteten Querförderers übergeben zu werden.

Vorteilhafterweise kann jede der mehreren Übergabewalzen von einem gemeinsamen oder separaten Antrieb rotatorisch angetrieben werden, wobei vorteilhafterweise die Umfangsgeschwindigkeit einer jeden Übergabewalze größer sein kann als die Fördergeschwindigkeit der benachbarten Querförderer. Die genannten Übergabewalzen werden dabei gleichsinnig angetrieben, um das Erntegut in Richtung der Querförderrichtung weiter zu fördern.

Vorteilhafterweise kann eine der Übergabewalzen an dem Auslaufbereich des ersten Querförderers angebracht oder damit verbunden sein, um Höhen- bzw. Kippbewegungen des ersten Querförderers mitzumachen. Eine zweite oder letzte Übergabewalze kann indes an dem Einlaufbereich des nachgeschalteten zweiten Querförderers angebracht oder damit verbunden sein, um Höhen- bzw. Kippbewegungen des zweiten Querförderers mitzumachen.

Die genannten Querförderer selbst können vorteilhafterweise insbesondere um eine liegende, zumindest näherungsweise fahrtrichtungsparallele Kippachse verkippbar aufgehängt sein, so dass die Querförderer vorteilhafterweise unabhängig voneinander seitlich verkippen können, d.h. mit jeweils einem rechten Endabschnitt nach unten und einem linken Endabschnitt nach oben und jeweils umgekehrt verschwenken zu können.

Die genannten Schwenkachsen der Querförderer können vorteilhafterweise jeweils in einem Mittelabschnitt des jeweiligen Querförderer angeordnet sein. Durch eine solche zumindest näherungsweise mittige Positionierung der Querförderer sind diese nicht nur gewichtstechnisch ausbalanciert, sondern es verringert sich auch der Hebelarm bezüglich der Kippbewegungen, so dass der Höhenversatz an den Randabschnitten des Querförderers bei einem gegebenen Kippwinkel relativ klein bleibt.

Die Erfindung wird nachfolgend anhand bevorzugter Ausführungsbeispiele und zugehöriger Zeichnungen näher erläutert. In den Zeichnungen zeigen:
- Fig. 1:: eine Draufsicht auf eine Erntemaschine in Form eines Bandschwaders mit zwei in Querförderrichtung nacheinander angeordneten Querförderern, zwischen denen eine Übergabewalze zum Übergeben des Ernteguts von dem einen an den anderen Querförderer vorgesehen ist,
- Fig. 2:: eine perspektivische Frontansicht der beiden Querförderer aus Fig. 1, die die Anordnung der Übergabewalze zwischen den beiden Querförderern zeigt,
- Fig. 3:: eine perspektivische Frontansicht des Bandschwaders aus den vorhergehenden Figuren, wobei der erste Querförderer mit seinem Auslaufabschnitt in einer nach unten verkippten Stellung gezeigt ist,
- Fig. 4:: eine perspektivische Frontansicht des Bandschwaders aus den vorhergehenden Figuren, wobei der zweite Querförderer mit seinem Einlaufbereich in einer nach unten verkippten Stellung gezeigt ist,
- Fig. 5:: eine Draufsicht auf eine Erntemaschine in Form eines Bandschwaders mit zwei separaten Querförderern ähnlich Fig. 1, wobei gemäß einer weiteren Ausführung der Erfindung zwischen den beiden Querförderer zwei Übergabewalzen angeordnet sind,
- Fig. 6:: eine perspektivische Frontansicht des Bandschwaders aus Fig. 5, wobei der zweite Querförderer mit seinem Einlaufbereich und der damit verbundenen zweiten Übergabewalze in einer nach oben verkippten Stellung gezeigt ist, und
- Fig. 7:: eine perspektivische Frontansicht der Erntemaschine aus den Figuren 5 und 6, wobei der zweite Querförderer mit seinem Einlaufbereich und der damit verbundenen Übergabewalze in einer nach unten verkippten Stellung gezeigt ist.

Die in den Figuren gezeigte Erntemaschine 1 kann zum Anbau an einen nicht dargestellten Schlepper ausgebildet sein und hierfür beispielsweise einen Anbaubock umfassen, der mittels einer Dreipunktanlenkung am Schlepper befestigbar ist oder eine Deichsel aufweisen, um die Erntemaschine als Aufsattelgerät ausbilden und an den Schlepper anhängen zu können. Insbesondere kann die genannte Erntemaschine 1 in Form eines Bandschwaders bzw. Mergers ausgebildet sein, wie dies die Figuren zeigen, wobei alternativ gegebenenfalls auch eine Ausbildung als Ladewagen und/oder Ballenpresse in Betracht kommt.

Wie die Figuren zeigen, kann die Erntemaschine 1 einen Maschinenrahmen 3 umfassen, der über ein Fahrwerk am Boden abgestützt sein kann, alternativ aber auch über einen Anbaubock 2 schwebend vom Schlepper gehalten sein kann.

Der genannte Maschinenrahmen 3 trägt einen Aufnahmeförderer 4, der Erntegut vom Boden aufsammelt und an einen Anschlussförderer 5 übergibt, der in Form eines Querförderers ausgebildet sein kann, um das Erntegut quer zur Fahrtrichtung 6 abzufördern und in einem Schwad abzulegen.

Der genannte Anschlussförderer 5 kann insbesondere ein Querförderband 15 umfassen, das endlos umlaufend antreibbar ist und einen näherungsweise liegend ausgerichtete Ablage- und Förderfläche bildet, auf die der Aufnahmeförderer 4 das Erntegut ablegt.

Der Aufnahmeförderer 4 kann einen Stachelrotor 7 aufweisen, der liegend angeordnet ist und sich mit seiner Umlaufachse 9 quer liegend zur Fahrtrichtung erstrecken kann. Die Förderzinken 8 des Stachelrotors 7 können dabei ungesteuert um die genannte Umlaufachse 9 auf einer Kreisbahn umlaufen oder auch gesteuert auf einer gegebenenfalls nicht kreisförmigen Umlaufbahn um die genannte Umlaufachse 9 herum umlaufen, wie dies eingangs erläutert ist.

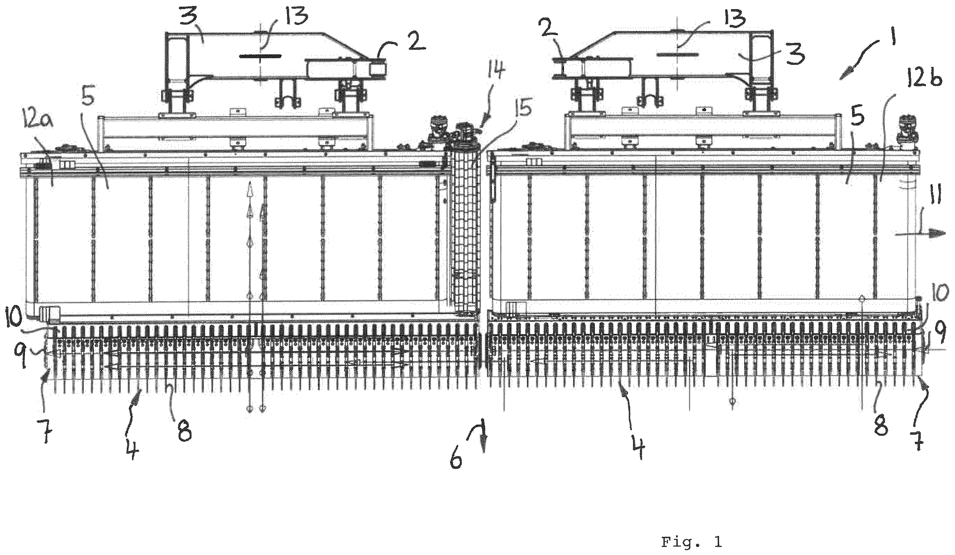

Der genannte Stachelrotor 7 kann zwischen den Förderzinken 8 angeordnete, sich bogenförmig um die Umlaufachse 9 herum erstreckende Abstreiferleisten 10 aufweisen, zwischen denen sich die Förderzinken 8 heraus erstrecken, vgl. Figur 1.

Der Stachelrotor 7 kann mit seiner Oberseite und/oder dem stromabseitigen Bereich der genannten Abstreiferleisten 10 zumindest näherungsweise auf der Höhe des Anschlussförderers 5 angeordnet sein, um das Erntegut sanft auf den Anschlussförderer 5 übergeben zu können.

Der genannte Stachelrotor 7 kann in zwei Stachelrotorsegmente unterteilt sein, die nebeneinander angeordnet sind und zusammen sich zur Arbeitsbreite des Geräts ergänzen. Zumindest in einer unausgelenkten Neutralstellung können sich die beiden Stachelrotorsegmente 7a und 7b zumindest näherungsweise koaxial zueinander erstrecken.

Auch der Anschlussförderer 5, der eine Querförderstrecke 11 liegend quer zur Fahrtrichtung 6 besitzt, ist vorteilhafterweise in zwei Querförderer 12 unterteilt, die jeweils als Querförderband 15 ausgebildet sein können und in ihrer Querförderfunktion aneinander anschließen, so dass das vom ersten Querförderer 15a abgeförderte Erntegut vom zweiten Querförderer übernommen und weiter quer gefördert wird, um dann in einem Schwad abgelegt zu werden.

Die beiden Querförderer 12 können vorteilhafterweise um eine liegende, zumindest näherungsweise fahrtrichtungsparallele Kippachse 13 verkippbar an dem Maschinenrahmen 3 aufgehängt sein, um sich jeweils variierenden Bodenkonturen anpassen zu können. Vorteilhafterweise können die beiden Querförderer 12 unabhängig voneinander verkippen, um eine individuelle Bodenanpassung zu erzielen. Gegebenenfalls könnte aber auch eine Kopplung vorgesehen sein, die die Kippbewegungen der beiden Querförderer 12 wechselseitig beeinflusst, beispielsweise dahingehend, dass eine maximale Verkippung des einen Querförderers durch die Stellung des anderen Querförderers begrenzt wird. Alternativ oder zusätzlich können die Kippbewegungen aber auch individuell beschränkt sein, beispielsweise indem der genannten Kippachse 13 jeweils Anschläge zugeordnet sind.

Die zuvor erläuterten Aufsammelförderer 4 in Form der Stachelrotorsegmente 7a und 7b können jeweils zusammen mit den Querfördern 12, denen sie zugeordnet sind, kippbar bezüglich der jeweiligen Kippachse 13 aufgehängt sein, so dass die Stachelrotoren zusammen mit den Querförderern Bodenanpassbewegungen ausführen und ein jeweiliges Stachelrotorsegment mit dem zugehörigen, nachgeschalteten Querförderer 12 um die jeweilige Kippachse 13 verkippen kann.

Die genannte Kippachse 13 erstreckt sich vorteilhafterweise in einem Mittelabschnitt des jeweiligen Querförderers 12, insbesondere etwa im Bereich von ein Drittel bis zwei Drittel der Länge des jeweiligen Querförderers 12, wobei die Länge die Erstreckung in Querförderrichtung meint.

Wie die Figuren 1 bis 4 zeigen, ist zwischen den beiden benachbarten Querförderern 12a und 12b als Übergabehilfsvorrichtung 14 zumindest eine Übergabewalze 15 vorgesehen, die um eine liegende, näherungsweise fahrtrichtungsparallele Walzendrehachse 16 drehbar aufgehängt ist. Die genannte Übergabewalze 15 erstreckt sich dabei im Wesentlichen über die gesamte Breite der benachbarten Querförderer 12, vgl. Fig. 1.

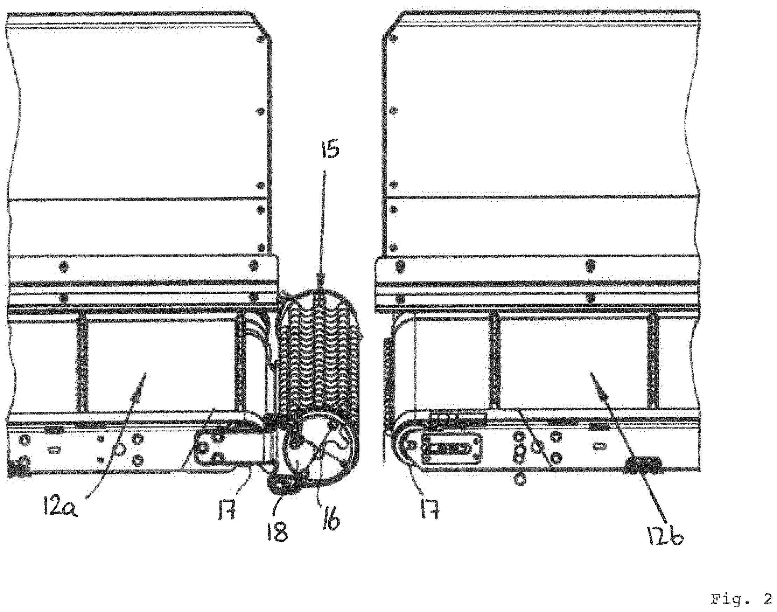

In der unausgelenkten Neutralstellung der beiden Querförderer 12, die in den Figuren 1 und 2 gezeigt ist, ist die Übergabewalze 15 relativ zu den beiden Querförderern 12 auf etwa derselben Höhe bzw. mittig angeordnet, d.h. die beiden Querförderer 12 besitzen mit ihren benachbarten Endabschnitten in etwa dasselbe Höhenniveau und die Übergabewalze 15 liegt zumindest näherungsweise auf dem besagten Höhenniveau.

Vorteilhafterweise ist die Oberseite der Übergabewalze 15 gegenüber den Vorderflächen der beiden Querförderer 12, die durch das jeweilige Obertrum des Förderbands definiert wird, leicht höher bzw. erhöht angeordnet, so dass das vom Auslaufbereich des ersten Querförderers 12a her kommende Erntegut bei Erreichen der Übergabewalze 15 leicht angehoben und sodann leicht nach unten fallend auf den Einlaufbereich des zweiten Querförderers 12b gegeben wird, zumindest wenn die beiden Querförderer 12 in ihrer jeweils unausgelenkten Neutralstellung sind.

Wie die Figuren 2, 3 und 4 verdeutlichen, besitzt die Übergabewalze 15 vorteilhafterweise einen Durchmesser, der deutlich größer ist als der Durchmesser der Umlenkrollen 17, um die die Vorderbänder der beiden Querförderer 12 an ihren benachbarten Endabschnitten umlaufen. Beispielsweise kann der Durchmesser der Übergabewalze 15 etwa dem Zweifachen des Durchmessers der genannten Umlenkrollen 17 entsprechen.

Die Oberfläche der Übergabewalze 15 ist vorteilhafterweise mit einer Profilstruktur versehen, die die Förderwirkung erhöht. Eine solche von der glatten Zylinderform reliefartig abweichende Oberflächenstruktur kann beispielsweise in Form von Längsrippen oder anderen Vorsprüngen ausgebildet sein, um die Eingriffswirkung der Übergabewalze zu erhöhen.

Die genannte Übergabewalze 15 kann von einem Walzenantrieb 18, der in den Figuren nur angedeutet ist, rotatorisch angetrieben werden, wobei die Umlaufgeschwindigkeit der Übergabewalze 15 vorteilhafterweise derart einstellbar ist, dass sie schneller ist als die Fördergeschwindigkeit der Querförderbänder 12.

Hierdurch wird das von der Übergabewalze 15 ergriffene Erntegut verlässlich auf den zweiten Querförderer 12b geworden.

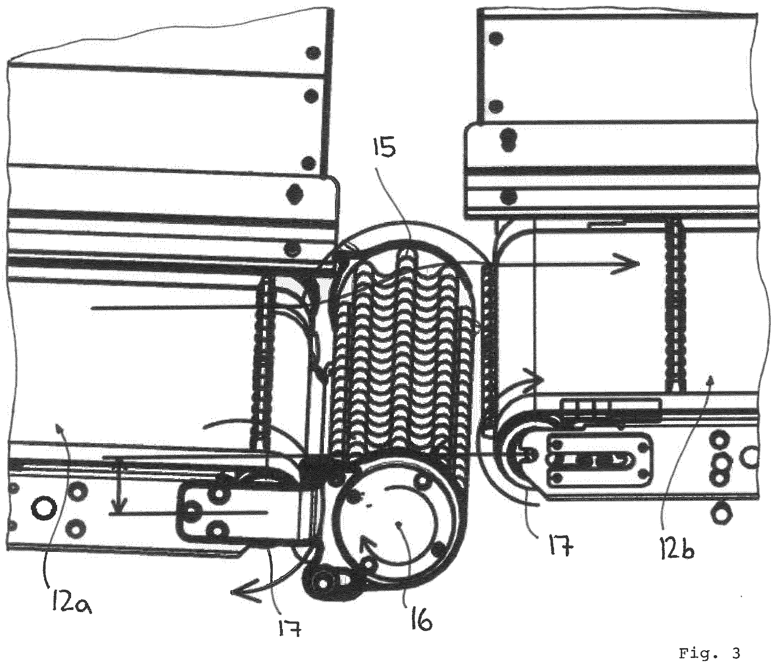

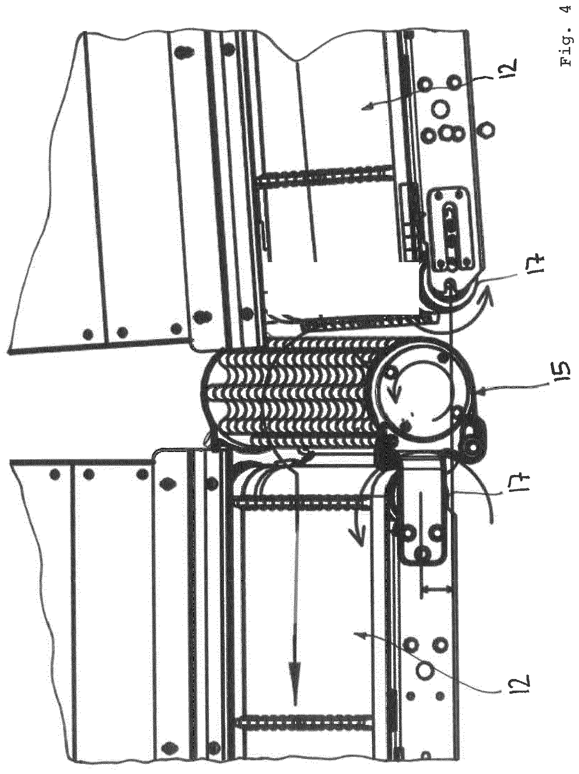

Wie Fig. 3 und Fig. 4 zeigt, kann die Übergabewalze 15 vorteilhafterweise an einem der beiden Querförderer 12 gelagert bzw. aufgehängt sein, insbesondere an dem Auslaufabschnitt des Querförderers, der normalerweise das Erntegut an den nachgeschalteten Querförderer übergibt.

Vorteilhafterweise kann die Querförderrichtung der Querförderer 12 und auch die Förderrichtung der dazwischengeschalteten Übergabewalze 15 umkehrbar sein, um wahlweise einen Erntegutschwad rechts oder links von der Erntemaschine ablegen zu können. Dies verdeutlicht beispielsweise ein Vergleich der Figuren 3 und 4.

Wie ebenfalls die Figuren 3 und 4 verdeutlichen, kann die Übergabewalze 15 mit einem der Querförderer 12 mitverkippen bzw. entsprechende Höhenbewegungen mitmachen. Kippt das entsprechende Ende des Querförderers nach oben, fährt auch die Übergabewalze 15 mit nach oben. Verkippt das entsprechende Querfördererende nach unten, fährt auch die Übergabewalze 15 entsprechend ein Stück weit nach unten, vgl. Fig. 3 und Fig. 4.

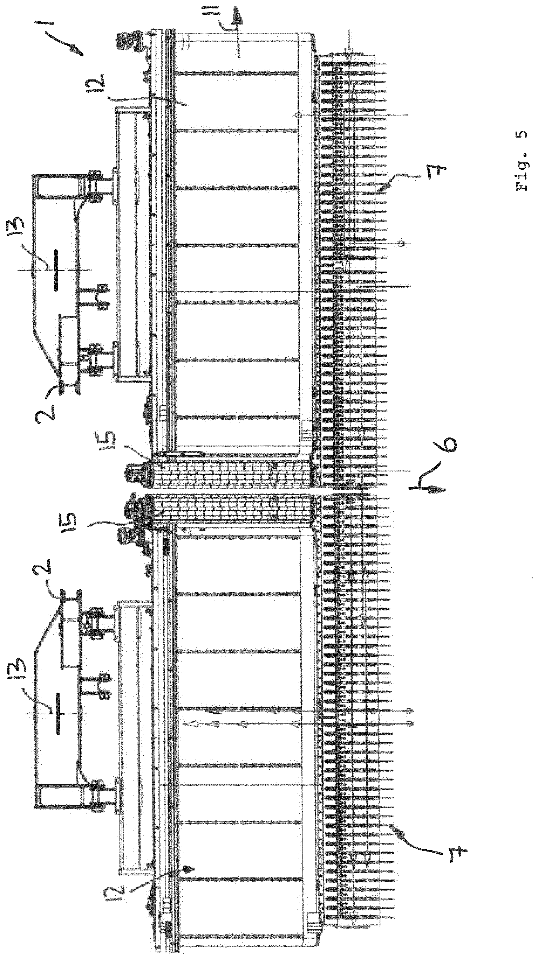

Wie die Figuren 5 bis 7 zeigen, können zwischen den beiden Querförderern 12 auch zwei oder mehr Übergabewalzen 15 angeordnet sein, wobei die zumindest zwei Übergabewalzen 15 vorteilhafterweise jeweils von einem Walzenantrieb 18 rotatorisch angetrieben werden können. In der erläuterten Weise kann die Umfangsgeschwindigkeit der Übergabewalzen 15 dabei die Fördergeschwindigkeit der Querförderer 12 übersteigen.

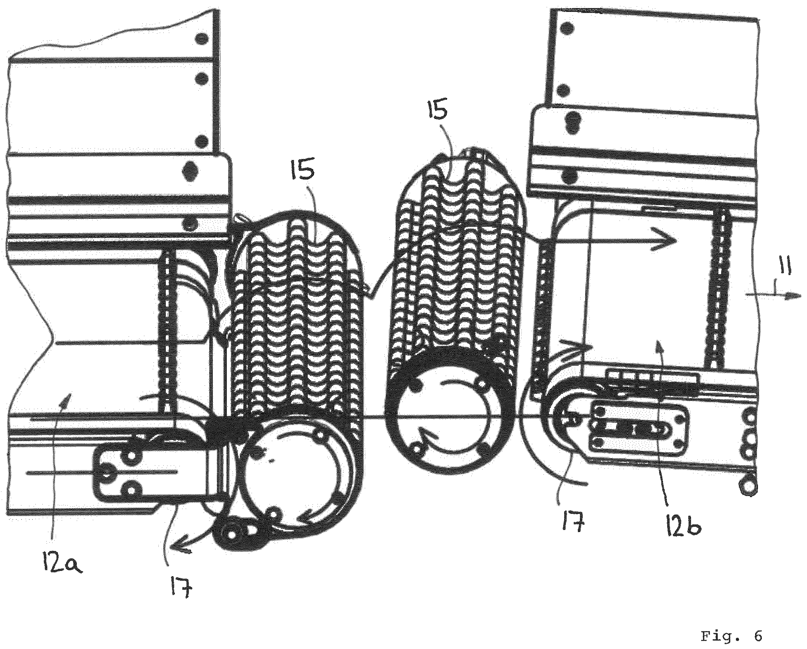

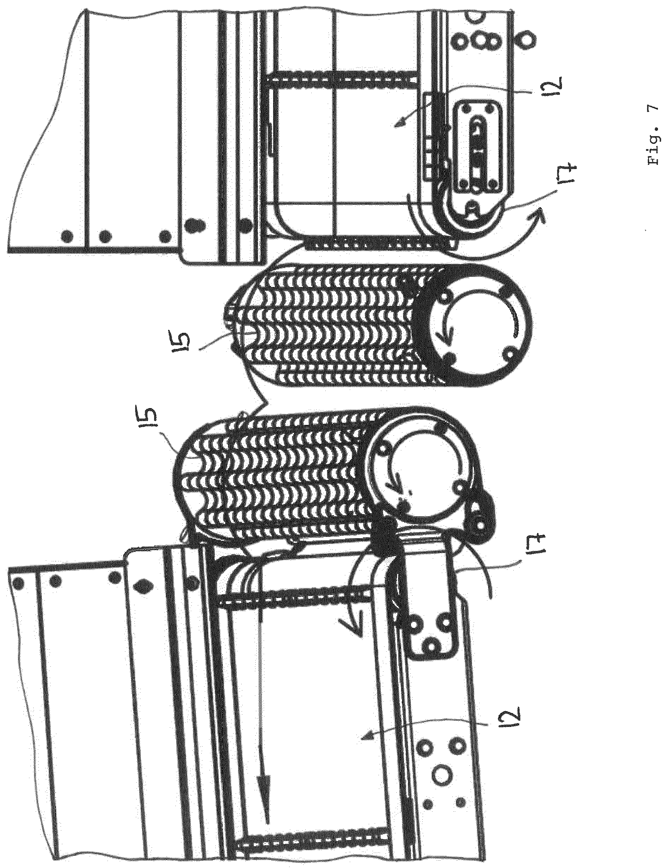

Wie die Figuren 6 und 7 verdeutlichen, kann eine der Übergabewalzen 15 dem Auslaufabschnitt des ersten Querförderers 12a und die andere Übergabewalze 15 an dem Einlaufabschnitt des zweiten Querförderers 12b angelenkt bzw. aufgehängt oder damit verbunden sein, so dass die eine Übergabewalze 15 die Auf- und Ab-Bewegungen des einen Querförderers mitmacht und die andere Übergabewalze die Auf- und Ab-Bewegungen des anderen Querförderers mitmacht.

## Patentansprüche

1. Erntemaschine mit einer Schwadvorrichtung, die eine Querförderstrecke (11) umfassend mehrere, aneinander anschließende Querförderer (12) aufweist, wobei zwischen zwei benachbarten Querförderern (12) ein Übergabehilfsförderer (14) zum Unterstützen der Erntegutübergabe von einem der Querförderer auf einen anderen der benachbarten Querförderer (12) vorgesehen ist, **dadurch gekennzeichnet, dass** der Übergabehilfsförderer (14) zumindest eine Übergabewalze (15) aufweist, die um eine liegende, zumindest näherungsweise fahrtrichtungsparallele Walzendrehachse (16) drehbar gelagert und zwischen den beiden benachbarten Querförderer (12) angeordnet ist.

2. Erntemaschine nach dem vorhergehenden Anspruch, wobei die zumindest eine Übergabewalze (15) von einem Walzenantrieb (18) antreibbar ist.

3. Erntemaschine nach dem vorhergehenden Anspruch, wobei der Walzenantrieb (18) dazu ausgebildet ist, die zumindest eine Übergabewalze (15) mit einer Umfangsgeschwindigkeit anzutreiben, die größer ist als die Querfördergeschwindigkeit zumindest eines der Querförderer (12).

4. Erntemaschine nach einem der vorhergehenden Ansprüche, wobei die zumindest eine Übergabewalze (15) mit ihrer Oberseite über die Förderfläche zumindest eines der benachbarten Querförderer (12) im Betrieb dauerhaft nach oben vorspringt und/oder der Auslaufbereich des an die Übergabewalze (15) übergebenden Querförderers (12) tieferliegend angeordnet ist als die Oberseite der Übergabewalze (15).

5. Erntemaschine nach einem der vorhergehenden Ansprüche, wobei die Querförderer (12) als Endlos-Umlaufförderer, insbesondere Förderbänder, ausgebildet sind, deren Umlaufmittel, insbesondere Förderband, an gegenüberliegenden Enden um Umlenkrollen (17) umgelenkt sind.

6. Erntemaschine nach dem vorhergehenden Anspruch, wobei die zumindest eine Übergabewalze (15) einen Durchmesser aufweist, der größer ist als der Durchmesser der benachbarten Umlenkrollen (17) der beiden benachbarten Querförderer (12).

7. Erntemaschine nach dem vorhergehenden Anspruch, wobei der Durchmesser der zumindest einen Übergabewalze (15) im Bereich von 125% bis 400% oder 150% bis 300% oder 175% bis 250% des Durchmessers der Umlenkrollen (17) der benachbarten Endabschnitte der benachbarten Querförderer (12) beträgt.

8. Erntemaschine nach einem der vorhergehenden Ansprüche, wobei zumindest einer der Querförderer (12) um eine liegende, zumindest näherungsweise fahrtrichtungsparallele Kippachse (13) verkippbar aufgehängt ist, so dass einander zugewandte Endabschnitte benachbarter Querförderer (12) relativ zueinander höhenbewegbar sind.

9. Erntemaschine nach dem vorhergehenden Anspruch, wobei die zumindest eine Übergabewalze (15) mit einem Endabschnitt einer der benachbarten Querförderer (12) verbunden und bei Kippbewegungen des verkippbaren Querförderers gegenüber dem Endabschnitt des anderen Querförderers eine Höhenbewegung erfährt.

10. Erntemaschine nach einem der vorhergehenden Ansprüche, wobei jeder der zumindest zwei Querförderer (12) um eine liegende, etwa fahrtrichtungsparallele Kippachse (13) verkippbar aufgehängt ist, wobei die Kippachsen (13) jeweils etwa in einem Mittelabschnitt des jeweiligen Querförderers (12) angeordnet sind.

11. Erntemaschine nach einem der vorhergehenden Ansprüche, wobei zwischen den beiden benachbarten Querförderern (12) zwei oder mehr Übergabewalzen (15) angeordnet sind, die in Querförderrichtung nacheinander das Erntegut weiterfördern und von dem Auslaufabschnitt des einen Querförderers an den Einlaufabschnitt des anderen Querförderers (12) übergeben.

12. Erntemaschine nach dem vorhergehenden Anspruch, wobei eine der mehreren Übergabewalzen (15) an einem Endabschnitt eines ersten der beiden benachbarten Querförderer aufgehängt ist und zusammen mit dem genannten Endabschnitt auf- und niederbewegbar ist und eine andere der mehreren Übergabewalzen (15) an dem Endabschnitt eines zweiten der benachbarten Querförderer (12) aufgehängt ist und zusammen mit dem Endabschnitt dieses zweiten Querförderers auf- und niederbewegbar ist.

13. Erntemaschine nach einem der beiden vorhergehenden Ansprüche, wobei die mehreren Übergabewalzen (15) jeweils rotatorisch von einem Walzenantrieb (18) antreibbar sind.

14. Erntemaschine nach einem der vorhergehenden Ansprüche, wobei die zumindest eine Übergabewalze (15) eine reliefartige Eingriffskontur an ihrer Umfangsseite aufweist, die von einer glatten Zylinderform abweicht.

15. Erntemaschine nach einem der vorhergehenden Ansprüche, wobei jedem der mehreren Querförderer (12) ein Aufsammelförderer (4) umfassend einen Stachelrotor (7) zugeordnet ist, wobei der Stachelrotor (7) jeweils zusammen mit dem jeweils zugehörigen, nachgeordneten Querförderer (12) um eine näherungsweise fahrtrichtungsparallele Kippachse (13) verkippbar aufgehängt ist.
